# EUROPEAN PATENT APPLICATION

(11) **EP 4 357 654 A1**
(43) Date of publication of application: **24.04.2024**
(21) Application number: 22824611.2
(22) Date of filing: 25.03.2022
(51) Int. Cl.: F16K 31/04, H02K 15/02, H02K 15/12, H02K 37/14

(54) **STATOR UNIT, ELECTRIC VALVE, AND MANUFACTURING METHOD FOR STATOR UNIT**

(30) Priority: 14.06.2021 JP 2021098945
(71) Applicant: Fujikoki Corporation, Tokyo 158-0082 (JP)
(72) Inventor: HOSOYA Takeshi, Tokyo 158-0082 (JP); ARAI Yusuke, Tokyo 158-0082 (JP)
(74) Representative: Ter Meer Steinmeister & Partner
(86) International application number: PCT/JP2022/014735
(87) International publication number: WO 2022/264615

(57) **Abstract**

[Object] To provide a stator unit capable of inhibiting water from entering an inner space of a yoke and inhibiting a coil wire from breaking, an electric valve, and a method for manufacturing the stator unit.

[Solution] A stator unit 80 includes an A-phase yoke 81A, a B-phase yoke 81B, a first resin portion 85-1, and a second resin portion 85-2. The A-phase yoke 81A and the B-phase yoke 81B include pole teeth. The first resin portion 85-1 includes an A-phase yoke filling part 86A in an inner space of the A-phase yoke 81A and a B-phase yoke filling part 86B in an inner space of the B-phase yoke 81B. The second resin portion 85-2 includes a sealing part 89 between the pole teeth. An A-phase bobbin 82A separates the A-phase yoke filling part 86A from the sealing part 89. A B-phase bobbin 82B separates the B-phase yoke filling part 86B from the sealing part 89.

## Description

### Technical Field

The present invention relates to a stator unit, an electric valve including the stator unit, and a method for manufacturing a stator unit.

### Background Art

Patent Literature 1 discloses a stator unit for an electric valve according to the related art. The stator unit in Patent Literature 1 includes a cover made of resin and two yokes each having a hollow annular shape. The two yokes are disposed coaxially, and one of the two yokes is in contact with the other. The cover houses the two yokes. The two yokes are integrated with a resin member. The resin member includes two parts and a terminal supporting part. Each of the two parts is disposed in an inner space of corresponding one of the two yokes. The terminal supporting part extends radially outward from an opening that spans the two yokes. The terminal supporting part connects the two parts disposed in the inner spaces of the two yokes. The two yokes each include pole teeth. The pole teeth are arranged circumferentially in an inner circumference of each of the two yokes.

### Citation List

### Patent Literature

Patent Literature 1: Japanese Unexamined Patent Application Publication No. 2015-204433

### Summary of Invention

### Technical Problem

The stator unit described above has a possibility that water enters the inner spaces of the two yokes from a space between the pole teeth. When the stator unit includes the resin member disposed in the space between the pole teeth, the resin member can inhibit water from entering the inner spaces of the two yokes. However, when a resin is molded into the resin member at a low pressure, the resin cannot adequately fill the space between the pole teeth, resulting in a possibility of insufficiently inhibiting the entry of water. Alternatively, when a resin is molded into the resin member at a high pressure, the resin may press against coils in the inner spaces of the two yokes, resulting in a possibility of the coil wires breaking.

Accordingly, it is an object of the present invention to provide a stator unit capable of inhibiting water from entering an inner space of a yoke and inhibiting a coil wire from breaking, an electric valve including the stator unit, and a method for manufacturing the stator unit.

### Solution to Problem

To achieve the object described above, a stator unit according to an aspect of the present invention includes a yoke having a hollow annular shape, a bobbin around which a coil is wound, the bobbin having a circular cylindrical shape and disposed in an inner space of the yoke, a first resin portion, and a second resin portion. The yoke includes pole teeth arranged circumferentially in an inner circumference of the yoke. The first resin portion includes a filling part filling the inner space of the yoke. The second resin portion includes a sealing part filling a space between the pole teeth. The bobbin separates the filling part from the sealing part.

In the present invention, preferably, a resin of the first resin portion is capable of being molded at a lower pressure than a pressure at which a resin of the second resin portion is molded.

In the present invention, preferably, a resin of the second resin portion has higher fluidity than a resin of the first resin portion.

In the present invention, preferably, the second resin portion further includes an annular part having a circular annular shape and disposed on an inner circumferential edge of an end surface of the yoke. Preferably, the annular part includes resin-part connection portions arranged circumferentially and connected to the sealing part.

In the present invention, preferably, the yoke includes a first plate portion having a circular annular shape, a second plate portion having a circular annular shape and disposed parallel to the first plate portion with a space in between, first pole teeth connected to an inner circumferential edge of the first plate portion at right angles to the first plate portion and pointing toward the second plate portion, and second pole teeth connected to an inner circumferential edge of the second plate portion at right angles to the second plate portion and pointing toward the first plate portion. Preferably, the first and second pole teeth are arranged alternately and circumferentially in the yoke. Preferably, the annular part is disposed on the inner circumferential edge of the first plate portion.

In the present invention, preferably, the stator unit further includes a cover made of resin. Preferably, the cover is molded integrally with an assembly including the yoke, the first resin portion, and the second resin portion and houses the assembly.

To achieve the object described above, an electric valve according to another aspect of the present invention includes the stator unit, a can having a circular cylindrical shape and disposed inside the stator unit, a magnet rotor disposed inside the can, and a valve member driven by the magnet rotor.

To achieve the object described above, a method for manufacturing a stator unit according to still another aspect of the present invention is a method for manufacturing a stator unit including a yoke having a hollow annular shape, a bobbin around which a coil is wound, the bobbin having a circular cylindrical shape and disposed in an inner space of the yoke, a first resin portion, and a second resin portion. The yoke includes pole teeth arranged circumferentially in an inner circumference of the yoke. The first resin portion includes a filling part filling the inner space of the yoke. The second resin portion includes a sealing part filling a space between the pole teeth. The bobbin separates the sealing part from the filling part. The method includes molding a resin into the second resin portion at a higher pressure than a pressure applied to a resin of the first resin portion when the first resin portion is molded.

### Advantageous Effects of Invention

According to the present invention, the stator unit includes the yoke having the hollow annular shape, the bobbin around which the coil is wound, the bobbin having the circular cylindrical shape and disposed in the inner space of the yoke, the first resin portion, and the second resin portion. The yoke includes pole teeth arranged circumferentially in an inner circumference of the yoke. The first resin portion includes a filling part filling the inner space of the yoke. The second resin portion includes a sealing part filling a space between the pole teeth. The bobbin separates the filling part from the sealing part.

In a cavity of a mold for molding a resin member, the bobbin separates the inner space of the yoke corresponding to the filling part of the first resin portion from the space between the pole teeth corresponding to the sealing part of the second resin portion. This enables the first resin portion to be molded separately from the second resin portion and a molding condition for the first resin portion to be set independently from a molding condition for the second resin portion. Thus, a resin is molded into the second resin portion at a higher pressure than a pressure applied to a resin of the first resin portion when the first resin portion is molded, enabling the resin to fill the space between the pole teeth adequately while avoiding a high pressure from being applied to the coil. According to the stator unit of the present invention, it is possible to inhibit water from entering the inner space of the yoke and inhibit the coil wire from breaking.

### Brief Description of Drawings

[Fig. 1] Fig. 1 is a longitudinal sectional view of an electric valve according to an embodiment of the present invention.
[Fig. 2] Fig. 2 is a perspective view of an assembly with yokes and a resin member of a stator unit of the electric valve in Fig. 1.
[Fig. 3] Fig. 3 is a longitudinal sectional view of the assembly in Fig. 2.
[Fig. 4] Fig. 4 is a longitudinal sectional view of the yokes, bobbins, and coils.
[Fig. 5] Fig. 5 is a sectional view illustrating a method for integrally molding the yokes, the bobbins, and the coils illustrated in Fig. 4, and the resin member.
[Fig. 6] Fig. 6 is a diagram schematically illustrating a flow of resin in a space between pole teeth of the yokes when the resin enters the space from multiple positions.
[Fig. 7] Fig. 7 is a diagram schematically illustrating a flow of resin in the space between the pole teeth of the yokes when the resin enters the space from one position. Description of Embodiments

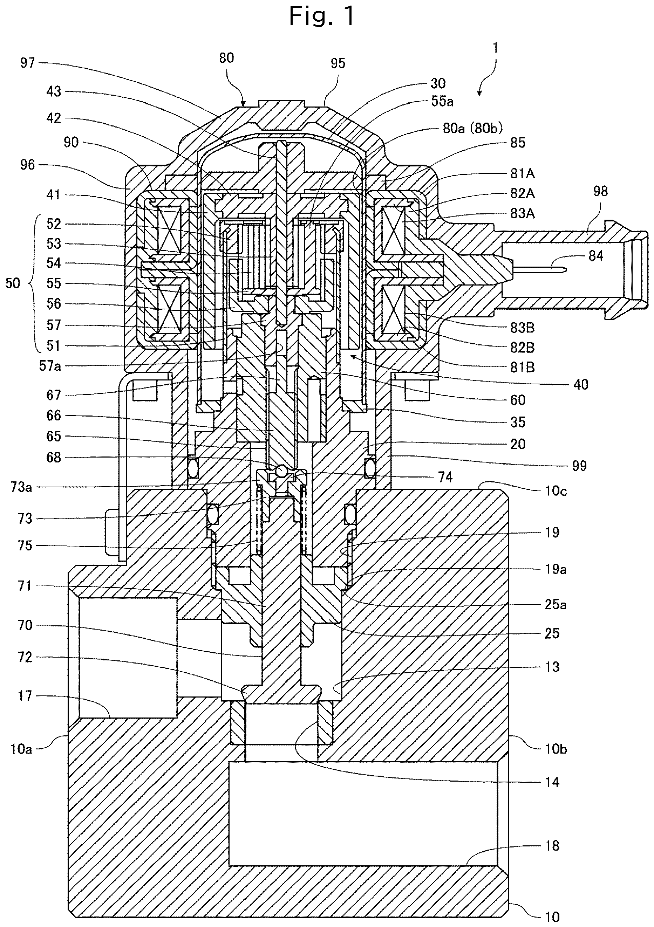

An electric valve according to an embodiment of the present invention is illustrated below with reference to Fig. 1 to Fig. 7. An electric valve 1 according to the present embodiment is, for example, used for controlling a flow rate of refrigerant in a refrigeration cycle system or the like.

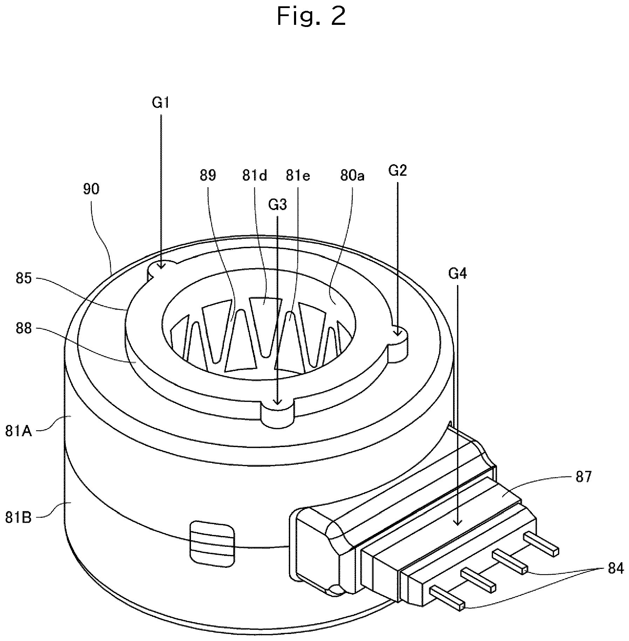

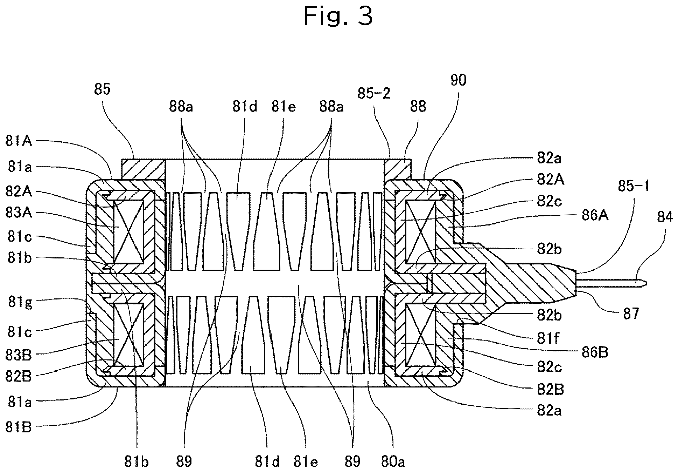

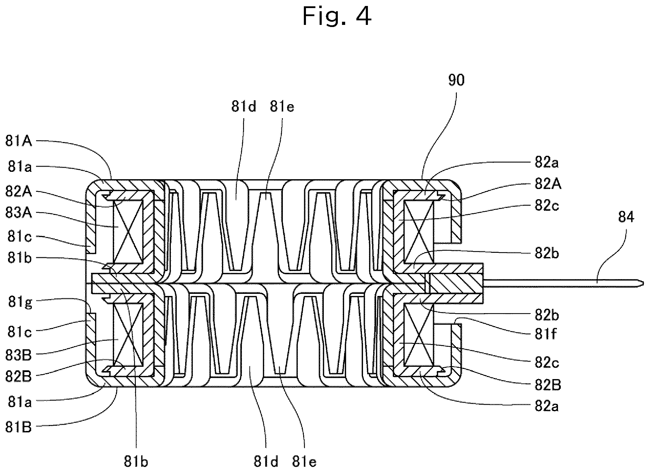

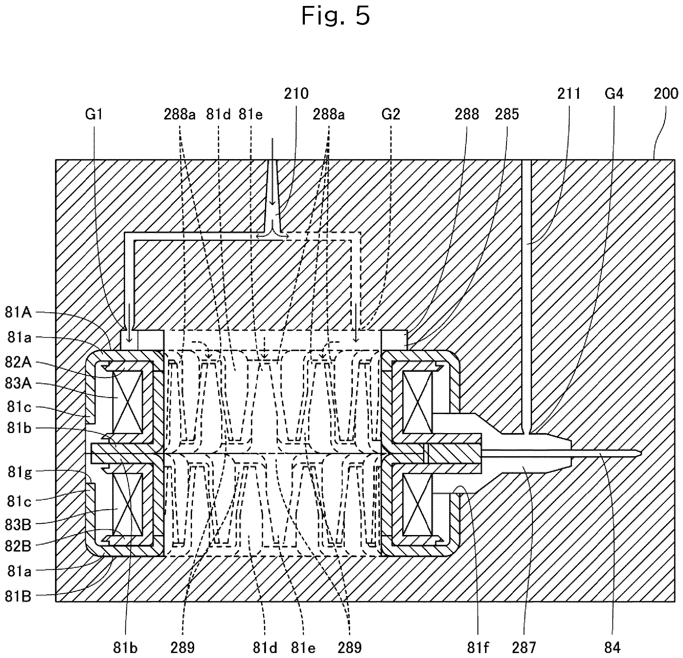

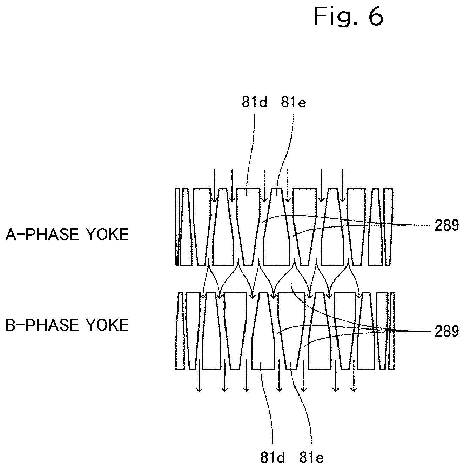

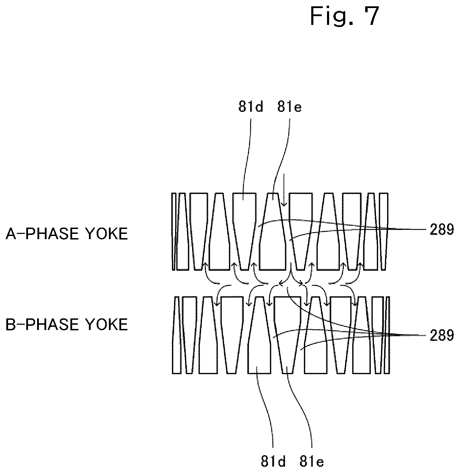

Fig. 1 is a longitudinal sectional view of an electric valve according to the embodiment of the present invention. Fig. 2 is a perspective view of an assembly with yokes and a resin member of a stator unit of the electric valve in Fig. 1. In Fig. 2, arrows indicate locations of gates of a mold used for molding the resin member. Fig. 3 is a longitudinal sectional view of the assembly in Fig. 2. Fig. 4 is a longitudinal sectional view of the yokes, bobbins, and coils. Fig. 4 illustrates a workpiece, which is in a process before molding the resin member, of the assembly in Fig. 2. Fig. 5 is a sectional view illustrating a method for integrally molding the yokes, the bobbins, and the coils illustrated in Fig. 4, and the resin member. In Fig. 5, illustration of a circular columnar portion of the mold disposed inside the inner circumference of the yokes is omitted, and the pole teeth of the yokes facing the circular columnar portion are illustrated by the dashed line. Fig. 6 and Fig. 7 are diagrams schematically illustrating flows of resin in a space between pole teeth of the yokes when the resin enters the space. Fig. 6 illustrates a state where the resin enters the space from multiple positions. Fig. 7 illustrates a state where the resin enters the space from one position. In Fig. 5 to Fig. 7, arrows schematically indicate flows of resin.

As illustrated in Fig. 1, the electric valve 1 according to the embodiment includes a valve body 10, a holder 20, a valve-member supporting member 25, a can 30, a driving section 40, a valve member 70, and a stator unit 80.

The valve body 10 has a rectangular parallelepiped shape. The valve body 10 includes a valve chamber 13 and a valve port 14 connected to the valve chamber 13. The valve body 10 includes a first passage 17 and a second passage 18. The first passage 17 has a first end that is connected to the valve chamber 13 and a second end that is open to a left surface 10a of the valve body 10. The second passage 18 has a first end that is connected to the valve chamber 13 via the valve port 14 and a second end that is open to a right surface 10b of the valve body 10. The valve body 10 has a mounting hole 19. The mounting hole 19 is open on an upper surface 10c of the valve body 10. The mounting hole 19 has an inner circumferential surface on which an internal thread is formed. The valve chamber 13 is open to a bottom surface 19a of the mounting hole 19.

The holder 20 has a circular cylindrical shape. The holder 20 has an outer circumferential surface on which an external thread is formed. The external thread is formed on the lower part of the outer circumferential surface of the holder 20. The external thread of the holder 20 is screwed into the internal thread of the mounting hole 19 of the valve body 10. The holder 20 is mounted to the valve body 10 by a screw structure.

The valve-member supporting member 25 has a circular cylindrical shape. The valve-member supporting member 25 is disposed inside the mounting hole 19 and interposed between the valve body 10 and the holder 20. The valve-member supporting member 25 has a lower part that is press-fitted into the valve chamber 13 from the mounting hole 19. The valve-member supporting member 25 has an outer circumferential surface on which an annular flat surface 25a facing downward is formed. The annular flat surface 25a is in contact with the bottom surface 19a of the mounting hole 19. The valve-member supporting member 25 supports the valve member 70 to be movable in an up-and-down direction.

The can 30 has a circular cylindrical shape that is closed at the upper end and is open at the lower end. A joint member 35 has a circular annular plate-like shape. The lower end of the can 30 is bonded to the outer circumferential edge of the joint member 35. The holder 20 has an upper part that is disposed inside the joint member 35. The inner circumferential edge of the joint member 35 is bonded to the holder 20.

The driving section 40 moves the valve member 70 in the up-and-down direction. The driving section 40 includes a magnet rotor 41, a planetary gear mechanism 50, a guide member 60, a driving shaft 65, and a ball 68.

The magnet rotor 41 has a circular cylindrical shape. The magnet rotor 41 has an outer circumferential surface on which N and S poles are arranged circumferentially and alternately. The magnet rotor 41 has an outer diameter smaller than the inner diameter of the can 30. The magnet rotor 41 is rotatably disposed inside the can 30. The magnet rotor 41 has an upper end to which a connecting member 42, which has a disc shape, is bonded. The connecting member 42 closes the upper end of the magnet rotor 41. A rotor shaft 43 extends through the center of the connecting member 42. The magnet rotor 41 is connected to the rotor shaft 43 via the connecting member 42.

The planetary gear mechanism 50 is disposed inside the magnet rotor 41. The planetary gear mechanism 50 includes a gear case 51, a fixed ring gear 52, a sun gear 53, planetary gears 54, a carrier 55, an output gear 56, and an output shaft 57. The gear case 51 has a circular cylindrical shape. The gear case 51 is bonded coaxially to the upper end of the holder 20. The fixed ring gear 52 is an internal gear. The fixed ring gear 52 is fixed to the upper end of the gear case 51. The sun gear 53 is disposed coaxially with the connecting member 42. The sun gear 53 is integrated with the connecting member 42. The rotor shaft 43 extends through the sun gear 53. The sun gear 53 rotates together with the magnet rotor 41 and the connecting member 42. The planetary gears 54 are interposed between the fixed ring gear 52 and the sun gear 53. The carrier 55 has a disc shape. The rotor shaft 43 extends through the center of the carrier 55. The carrier 55 is rotatable around the rotor shaft 43. The carrier 55 includes supporting shafts 55a. The supporting shafts 55a support the planetary gears 54 to be rotatable. The output gear 56 has a bottomed circular cylindrical shape. The output gear 56 is an internal gear. The planetary gears 54 are interposed between the output gear 56 and the sun gear 53. The output shaft 57 has a circular columnar shape. The output shaft 57 has an upper part that is disposed in a hole formed in the bottom of the output gear 56. The output shaft 57 is fixed to the output gear 56. The output shaft 57 has a lower part in which a slit 57a extends in the up-and-down direction. The fixed ring gear 52, the planetary gears 54, the carrier 55, and the output gear 56 together reduce the rotational speed of the sun gear 53 and transmit the rotation of the sun gear 53 to the output shaft 57.

The guide member 60 has a circular cylindrical shape. The guide member 60 is disposed inside the upper part of the holder 20. The guide member 60 has an inner circumferential surface on which an internal thread is formed. The internal thread is formed on the lower part of the inner circumferential surface of the guide member 60. The output shaft 57 is disposed inside the guide member 60. The guide member 60 supports the output shaft 57 to be rotatable.

The driving shaft 65 includes a circular columnar portion 66 and a flat plate portion 67. The circular columnar portion 66 has an upper end to which the flat plate portion 67 is connected. The circular columnar portion 66 and the flat plate portion 67 are integrally formed. The circular columnar portion 66 has an outer circumferential surface on which an external thread is formed. The external thread of the circular columnar portion 66 is screwed into the internal thread of the guide member 60. The flat plate portion 67 is disposed in the slit 57a of the output shaft 57 and is movable in the up-and-down direction. The output shaft 57 rotates the driving shaft 65, and a screw-feed action moves the driving shaft 65 in the up-and-down direction.

The valve member 70 includes a stem 71, a valve portion 72, a spring receiving portion 73, and a ball receiving portion 74. The stem 71 has a circular columnar shape. The stem 71 is disposed inside the valve-member supporting member 25. The stem 71 is supported by the valve-member supporting member 25 and is movable in the up-and-down direction. The valve portion 72 is disposed at the lower end of the stem 71. The valve portion 72 has a circular annular shape. The valve portion 72 projects radially outward from the outer circumferential surface of the stem 71. The valve portion 72 faces the valve port 14 in the up-and down direction. The spring receiving portion 73 has a circular columnar shape. The spring receiving portion 73 is bonded to the upper end of the stem 71. The spring receiving portion 73 has a flange portion 73a projecting radially outward. The ball receiving portion 74 includes a flat plate portion and a projection. The flat plate portion has a circular shape. The projection is connected to the lower surface of the flat plate portion. The flat plate portion of the ball receiving portion 74 is in contact with the ball 68, and the projection of the ball receiving portion 74 is fitted into a hole formed in the spring receiving portion 73. The ball 68 is interposed between the ball receiving portion 74 and the driving shaft 65. A valve opening spring 75 is interposed between the flange portion 73a of the spring receiving portion 73 and the valve-member supporting member 25. The valve opening spring 75 is a compression coil spring. The valve opening spring 75 pushes the valve member 70 (the flange portion 73a) upward. The valve portion 72 moves toward and away from the valve port 14. This enables the valve member 70 to change the opening area of the valve port 14 in a stepless manner (including a substantially stepless manner). The minimum area of the valve port 14 may be greater than zero (i.e., the valve port 14 may be slightly open). Alternatively, the minimum area of the valve port 14 may be zero (i.e., the valve port 14 may be fully closed).

The stator unit 80 has a fitting hole 80b defined by an inner circumferential surface 80a of the stator unit 80. The can 30 is fitted into the fitting hole 80b. The can 30 is disposed inside the inner circumferential surface 80a of the stator unit 80. The stator unit 80 and the magnet rotor 41 are members of a stepping motor. The stator unit 80 includes an A-phase yoke 81A, an A-phase bobbin 82A, an A-phase coil 83A, a B-phase yoke 81B, a B-phase bobbin 82B, a B-phase coil 83B, a resin member 85, and a cover 95.

The A-phase yoke 81A, the A-phase bobbin 82A, the A-phase coil 83A, the B-phase yoke 81B, the B-phase bobbin 82B, the B-phase coil 83B, and the resin member 85 are combined with each other and constitute an assembly 90 illustrated in Fig. 2.

The A-phase yoke 81A has a hollow annular shape with a cross section rectangular in a radial direction. The A-phase yoke 81A is made of metal. The A-phase yoke 81A includes a first plate portion 81a, a second plate portion 81b, an outer plate portion 81c, multiple first pole teeth 81d, and multiple second pole teeth 81e. The first plate portion 81a has a circular annular shape. The second plate portion 81b has a circular annular shape. The second plate portion 81b is disposed parallel to the first plate portion 81a. The second plate portion 81b is spaced from the first plate portion 81a in the up-and-down direction. The second plate portion 81b has the same inner and outer diameters as those of the first plate portion 81a. The outer plate portion 81c has a circular cylindrical shape. The outer plate portion 81c has a first end that is connected to the outer circumferential edge of the first plate portion 81a. The outer plate portion 81c is disposed at a right angle to the first plate portion 81a. The outer plate portion 81c has a second end that is in contact with the outer circumferential edge of the second plate portion 81b. The outer plate portion 81c connects the outer circumferential edge of the first plate portion 81a and the outer circumferential edge of the second plate portion 81b. The first pole teeth 81d are connected to the inner circumferential edge of the first plate portion 81a. The first pole teeth 81d are disposed at right angles to the first plate portion 81a. The first pole teeth 81d have a tapered shape, and the tips of the first pole teeth 81d point toward the second plate portion 81b. The first pole teeth 81d are arranged circumferentially at equal intervals. The second pole teeth 81e are connected to the inner circumferential edge of the second plate portion 81b. The second pole teeth 81e are disposed at right angles to the second plate portion 81b. The second pole teeth 81e have a tapered shape, and the tips of the second pole teeth 81e point toward the first plate portion 81a. The second pole teeth 81e are arranged circumferentially at equal intervals. The first pole teeth 81d and the second pole teeth 81e are arranged alternately and circumferentially at intervals. The first pole teeth 81d and second pole teeth 81e form the inner circumferential surface 80a of the stator unit 80. In this specification, the meaning of the word "same" includes substantially the same.

The A-phase yoke 81A is obtained by forming a component including the first plate portion 81a, the outer plate portion 81c, and the first pole teeth 81d and a component including the second plate portion 81b and the second pole teeth 81e by presswork and combining these components.

The A-phase bobbin 82A has a circular cylindrical shape. The A-phase bobbin 82A is made of resin. The A-phase bobbin 82A includes a first flange portion 82a, a second flange portion 82b, and a circular cylindrical portion 82c. The first flange portion 82a has a circular annular flat plate-like shape. The second flange portion 82b has a circular annular flat plate-like shape. The second flange portion 82b is disposed parallel to the first flange portion 82a. The second flange portion 82b is spaced from the first flange portion 82a in the up-and-down direction. The circular cylindrical portion 82c connects the inner circumferential edge of the first flange portion 82a and the inner circumferential edge of the second flange portion 82b. The A-phase coil 83A is wound around the A-phase bobbin 82A. The A-phase bobbin 82A and the A-phase coil 83A are disposed in an inner space of the A-phase yoke 81A. The inner space of the A-phase yoke 81A is a space surrounded by the first plate portion 81a, the second plate portion 81b, the outer plate portion 81c, the first pole teeth 81d, and the second pole teeth 81e. The first flange portion 82a is in contact with the first plate portion 81a of the A-phase yoke 81A. The second flange portion 82b is in contact with the second plate portion 81b of the A-phase yoke 81A. The circular cylindrical portion 82c is in contact with the first pole teeth 81d and the second pole teeth 81e of the A-phase yoke 81A. The A-phase bobbin 82A separates the inner space of the A-phase yoke 81A from a space between the first pole teeth 81d and the second pole teeth 81e of the A-phase yoke 81A.

The B-phase yoke 81B, the B-phase bobbin 82B, and the B-phase coil 83B have the same configurations as those of the A-phase yoke 81A, the A-phase bobbin 82A, and the A-phase coil 83A, except for being arranged upside down. The A-phase yoke 81A is disposed coaxially with the B-phase yoke 81B. The second plate portion 81b of the A-phase yoke 81A is in contact with the second plate portion 81b of the B-phase yoke 81B. The second end of the outer plate portion 81c of the A-phase yoke 81A is in contact with the second end of the outer plate portion 81c of the B-phase yoke 81B. Terminals 84 are connected to the A-phase coil 83A and the B-phase coil 83B.

The A-phase yoke 81A and the B-phase yoke 81B have a first opening 81f and a second opening 81g. The first opening 81f spans the outer plate portion 81c of the A-phase yoke 81A and the outer plate portion 81c of the B-phase yoke 81B. The second opening 81g also spans the outer plate portion 81c of the A-phase yoke 81A and the outer plate portion 81c of the B-phase yoke 81B. The center position of the second opening 81g is away from the center position of the first opening 81f in a circumferential direction of the A-phase yoke 81A by 180 degrees. Preferably, the center position of the second opening 81g is away from the center position of the first opening 81f in the circumferential direction of the A-phase yoke 81A by 90 degrees or more.

The resin member 85 is made of resin and is integrally molded with the A-phase yoke 81A and the B-phase yoke 81B. The resin member 85 includes an A-phase yoke filling part 86A, a B-phase yoke filling part 86B, a terminal supporting part 87, an annular part 88, and a sealing part 89.

The A-phase yoke filling part 86A is disposed in the inner space of the A-phase yoke 81A. The A-phase yoke filling part 86A fills the inner space of the A-phase yoke 81A and covers the A-phase bobbin 82A and the A-phase coil 83A. The B-phase yoke filling part 86B is disposed in an inner space of the B-phase yoke 81B. The B-phase yoke filling part 86B fills the inner space of the B-phase yoke 81B and covers the B-phase bobbin 82B and the B-phase coil 83B.

The terminal supporting part 87 extends radially outward (to the right in Fig. 1) from the first opening 81f. The terminal supporting part 87 connects the A-phase yoke filling part 86A and the B-phase yoke filling part 86B. The terminals 84 project at the tip of the terminal supporting part 87.

The annular part 88 has a circular annular shape. The annular part 88 is disposed on the inner circumferential edge of the upper surface (the end surface of the A-phase yoke 81A) of the first plate portion 81a of the A-phase yoke 81A.

The sealing part 89 has a substantially circular cylindrical shape. The sealing part 89 is disposed in a space between the pole teeth of the A-phase yoke 81A and the B-phase yoke 81B (the first pole teeth 81d and the second pole teeth 81e). The space has multiple branch portions, which are connected to each other to form a single space. The sealing part 89 fills the space. The sealing part 89 is continuous with and flush with the first pole teeth 81d and the second pole teeth 81e. The sealing part 89 forms the inner circumferential surface 80a of the stator unit 80 together with the first pole teeth 81d and the second pole teeth 81e. The sealing part 89 is connected to resin-part connection portions 88a of the annular part 88 arranged circumferentially. The sealing part 89 has the same inner diameter as that of the annular part 88. The number of the resin-part connection portions 88a is equal to sum of the number of the first pole teeth 81d of the A-phase yoke 81A and the number of the second pole teeth 81e of the A-phase yoke 81A.

The resin member 85 includes a first resin portion 85-1 and a second resin portion 85-2. The first resin portion 85-1 includes the A-phase yoke filling part 86A, the B-phase yoke filling part 86B, and the terminal supporting part 87. The second resin portion 85-2 includes the annular part 88 and the sealing part 89. In the present embodiment, the second resin portion 85-2 is separate from the first resin portion 85-1. The second resin portion 85-2 may be connected to the first resin portion 85-1, for example, at a position outside the A-phase yoke 81A and the B-phase yoke 81B. The A-phase bobbin 82A separates the A-phase yoke filling part 86A from the sealing part 89. The B-phase bobbin 82B separates the B-phase yoke filling part 86B from the sealing part 89. A resin is molded into the first resin portion 85-1 at a relatively low pressure in order to suppress the coil wires from breaking. A resin is molded into the second resin portion 85-2 at a relatively high pressure (at least higher than a pressure applied to the resin of the first resin portion 85-1) in order to fill the space between the first pole teeth 81d and the second pole teeth 81e.

In the present embodiment, the resin of the first resin portion 85-1 and the resin of the second resin portion 85-2 are the same type of resin and are, for example, polyphenylene sulfide (PPS). The resin of the first resin portion 85-1 is a resin forming the first resin portion 85-1 and is also referred to as a "first resin", and the resin of the second resin portion 85-2 is a resin forming the second resin portion 85-2 and is also referred to as a "second resin". The first resin and the second resin may be different types of resin. For example, the first resin may be polybutylene terephthalate (PBT), and the second resin may be polyphenylene ether (PPE). Preferably, the first resin is capable of being molded at a lower pressure than a pressure at which the second resin is molded. Preferably, the second resin has higher fluidity than the first resin. In addition to the above, the resins may be syndiotactic polystyrene (SPS) or polyamide (PA). In this specification, "fluidity" refers to a property concerning flowing and is indicated by indices such as melt mass flow rate (MFR) and melt volume flow rate (MVR). Resin flows more easily as its fluidity increases.

The cover 95 is made of resin. The cover 95 has a circular cylindrical shape that is closed at the upper end and is open at the lower end. The cover 95 houses the assembly 90. The cover 95 is integrally molded with the assembly 90. The cover 95 includes a peripheral wall portion 96, an upper wall portion 97, a connector portion 98, and a circular cylindrical portion 99. The peripheral wall portion 96 has an inner circumferential surface in which the annular part 88 of the resin member 85, the A-phase yoke 81A, and the B-phase yoke 81B are embedded. The peripheral wall portion 96 has an upper end to which the upper wall portion 97 is connected. The upper wall portion 97 has a dome shape. The upper end of the can 30 is disposed inside the upper wall portion 97. The connector portion 98 has a tubular shape extending radially outward (to the right in Fig. 1) from the peripheral wall portion 96. The terminals 84 are disposed inside the connector portion 98. The circular cylindrical portion 99 extends downward from the lower end of the peripheral wall portion 96. The circular cylindrical portion 99 has a lower end that is in contact with the upper surface 10c of the valve body 10. The cover 95 may be omitted, and only the assembly 90 may be used as a stator unit.

In the electric valve 1, the respective central axes of the valve port 14, the holder 20, the valve-member supporting member 25, the can 30, the magnet rotor 41, the connecting member 42, the rotor shaft 43, the output shaft 57, the guide member 60, the driving shaft 65, the valve member 70, the A-phase yoke 81A, the B-phase yoke 81B, the annular part 88, and the sealing part 89 are aligned.

The operation of the electric valve 1 is described below.

In the electric valve 1, currents are applied to the A-phase coil 83A and the B-phase coil 83B to rotate the magnet rotor 41 in one direction. The rotation of the magnet rotor 41 is transmitted to the driving shaft 65 via the planetary gear mechanism 50. The screw-feed action between the driving shaft 65 and the guide member 60 moves the driving shaft 65 downward. The driving shaft 65 pushes the valve member 70 downward, reducing the opening area of the valve port 14.

In the electric valve 1, currents are applied to the A-phase coil 83A and the B-phase coil 83B to rotate the magnet rotor 41 in the other direction. The rotation of the magnet rotor 41 is transmitted to the driving shaft 65 via the planetary gear mechanism 50. The screw-feed action between the driving shaft 65 and the guide member 60 moves the driving shaft 65 upward. The valve opening spring 75 pushes the valve member 70 upward, increasing the opening area of the valve port 14.

Next, a method for manufacturing the stator unit 80 of the electric valve 1 is described with reference to Fig. 4 to Fig. 7.

The A-phase yoke 81A and the B-phase yoke 81B are formed by presswork. The A-phase bobbin 82A around which the A-phase coil 83A is wound is placed in the inner space of the A-phase yoke 81A. The B-phase bobbin 82B around which the B-phase coil 83B is wound is placed in the inner space of the B-phase yoke 81B. The second plate portion 81b of the A-phase yoke 81A is brought into contact with the second plate portion 81b of the B-phase yoke 81B, and the A-phase yoke 81A and the B-phase yoke 81B are aligned coaxially. The terminals 84 are connected to the A-phase coil 83A and the B-phase coil 83B (Fig. 4)

Then, as illustrated in Fig. 5, the A-phase yoke 81A and the B-phase yoke 81B are placed in a cavity 285 of a mold 200. The mold 200 is used for molding the resin member 85.

The cavity 285 has a shape corresponding to the contours of the A-phase yoke 81A, the B-phase yoke 81B, the terminal supporting part 87, the annular part 88, and the sealing part 89 (the inner circumferential surface 80a). The cavity 285 includes a first cavity part 288, a second cavity part 289, and a third cavity part 287.

The first cavity part 288 corresponds to the annular part 88 of the resin member 85. The second cavity part 289 corresponds to the sealing part 89 of the resin member 85 and corresponds to the space between the pole teeth of the A-phase yoke 81A and the B-phase yoke 81B. The first cavity part 288 includes cavity-part connection portions 288a corresponding to the resin-part connection portions 88a of the annular part 88. The cavity-part connection portions 288a are connected to the second cavity part 289. The third cavity part 287 corresponds to the terminal supporting part 87 of the resin member 85.

In the mold 200, a resin passage 210 is connected to the first cavity part 288 having a circular annular shape via gates G1 to G3. The gates G1 to G3 are arranged circumferentially at intervals. A resin passage 211 is connected to the third cavity part 287 via a gate G4.

The cavity 285 is filled with resin. Specifically, resin is injected from the resin passage 211 into the third cavity part 287 via the gate G4. The resin flows from the third cavity part 287 into the inner space of the A-phase yoke 81A and the inner space of the B-phase yoke 81B through the first opening 81f. After the resin is injected into the third cavity part 287, the inner space of the A-phase yoke 81A, and the inner space of the B-phase yoke 81B, the resin is held at pressure P1. In other words, pressure P1 is applied to the resin injected into the third cavity part 287, the inner space of the A-phase yoke 81A, and the inner space of the B-phase yoke 81B.

Additionally, resin is injected from the resin passage 210 into the first cavity part 288 via the gates G1 to G3. The resin flows circumferentially in the first cavity part 288. Then, the resin flows from the first cavity part 288 into the second cavity part 289 through the cavity-part connection portions 288a. The resin flows into the second cavity part 289 from multiple positions, and the resin flows in the axial direction (downward) in the second cavity part 289, as illustrated in Fig. 6. Thus, the resin spreads in the second cavity part smoothly, enabling a variation in the amount of the resin flowing into the second cavity part to be reduced.

Fig. 7 illustrates flow of resin in a comparative example. The comparative example has a configuration in which a cavity 285 of a mold 200 does not include a first cavity part 288 corresponding to an annular part 88, and a single gate is connected to a second cavity part 289. In the comparative example, resin flows into the second cavity part 289 from a single position, and the resin flows circumferentially (left-and-right direction) and axially (up-and-down direction) in the second cavity part 289. This causes the flowing distance of the resin in the second cavity part 289 from the single gate to be comparatively long, resulting in a possibility of causing a variation in the amount of the resin flowing into the second cavity part 289 due to, for example, the influence of a change in the viscosity of the resin in flowing.

After the resin is injected into the first cavity part 288 and the second cavity part 289, the resin is held at pressure P2. In other words, pressure P2 is applied to the resin injected into the first cavity part 288 and the second cavity part 289. Pressure P2 is higher than pressure P1.

In the present embodiment, the process in which the resin is injected from the resin passage 211 into the third cavity part 287 (process for molding the first resin portion 85-1) is separate from the process in which the resin is injected from the resin passage 210 into the first cavity part 288 (process for molding the second resin portion 85-2), and these processes have different molding conditions. One of the processes has a molding condition of pressure P1, while the other of the processes has a molding condition of pressure P2 higher than pressure P1. Pressure P2 can also be higher than pressure P1 by using a configuration in which the resin passage 211 is connected to the resin passage 210, and the pressure loss in the resin passage 211 is greater than that in the resin passage 210.

Thus, the first cavity part 288, the second cavity part 289, the third cavity part 287, the inner space of the A-phase yoke 81A, and the inner space of the B-phase yoke 81B are filled with the resin. After the resin solidifies, the resin forms the first resin portion 85-1 (the A-phase yoke filling part 86A, the B-phase yoke filling part 86B, and the terminal supporting part 87) and the second resin portion 85-2 (the annular part 88 and the sealing part 89). Consequently, the A-phase yoke 81A, the A-phase bobbin 82A, the A-phase coil 83A, the B-phase yoke 81B, the B-phase bobbin 82B, the B-phase coil 83B, and the resin member 85 are integrated and form the assembly 90. The assembly 90 is ejected from the mold 200.

The assembly 90 is placed in a cavity of another mold (not illustrated) for molding the cover 95. The cavity is filled with resin to mold the cover 95. After the resin solidifies, the assembly 90 and the cover 95 are integrated and form the stator unit 80. The stator unit 80 is ejected from the mold for molding the cover 95. This method results in the completion of the stator unit 80.

The electric valve 1 described above includes the stator unit 80, the can 30 having the circular cylindrical shape and disposed inside the stator unit 80, the magnet rotor 41 disposed inside the can 30, and the valve member 70 driven by the magnet rotor 41.

The stator unit 80 includes the A-phase yoke 81A having the hollow annular shape, the B-phase yoke 81B having the hollow annular shape, the A-phase bobbin 82A around which the A-phase coil 83A is wound, the A-phase bobbin 82A having the circular cylindrical shape and disposed in the inner space of the A-phase yoke 81A, the B-phase bobbin 82B around which the B-phase coil 83B is wound, the B-phase bobbin 82B having the circular cylindrical shape and disposed in the inner space of the B-phase yoke 81B, and the resin member 85 (the first resin portion 85-1 and the second resin portion 85-2) with which the A-phase yoke 81A and the B-phase yoke 81B are integrally molded. The A-phase yoke 81A and the B-phase yoke 81B each include the first pole teeth 81d and the second pole teeth 81e. The first pole teeth 81d and the second pole teeth 81e are arranged circumferentially in the inner circumference of the A-phase yoke 81A. The first pole teeth 81d and the second pole teeth 81e are arranged circumferentially in the inner circumference of the B-phase yoke 81B. The first resin portion 85-1 includes the A-phase yoke filling part 86A disposed in the inner space of the A-phase yoke 81A and the B-phase yoke filling part 86B disposed in the inner space of the B-phase yoke 81B. The second resin portion 85-2 includes the sealing part 89 disposed in the space between the first pole teeth 81d and the second pole teeth 81e. The A-phase bobbin 82A separates the A-phase yoke filling part 86A from the sealing part 89, and the B-phase bobbin 82B separates the B-phase yoke filling part 86B from the sealing part 89.

In this configuration, in the cavity 285 of the mold 200 for molding the resin member 85, the A-phase bobbin 82A separates the inner space of the A-phase yoke 81A corresponding to the A-phase yoke filling part 86A from the space (the second cavity part 289) between the first pole teeth 81d and the second pole teeth 81e corresponding to the sealing part 89, and the B-phase bobbin 82B separates the inner space of the B-phase yoke 81B corresponding to the B-phase yoke filling part 86B from the space (the second cavity part 289) between the first pole teeth 81d and the second pole teeth 81e corresponding to the sealing part 89. This enables the first resin portion 85-1 to be molded separately from the second resin portion 85-2 and a molding condition for the first resin portion 85-1 to be set independently from a molding condition for the second resin portion 85-2. Thus, the resin is molded into the second resin portion 85-2 at a higher pressure than a pressure applied to the resin of the first resin portion 85-1 when the first resin portion 85-1 is molded, enabling the resin to fill the space between the first pole teeth 81d and the second pole teeth 81e adequately while avoiding a high pressure from being applied to the A-phase coil 83A and the B-phase coil 83B. According to the stator unit 80, it is possible to inhibit water from entering the inner spaces of the A-phase yoke 81A and the B-phase yoke 81B and to inhibit wires of the A-phase coil 83A and the B-phase coil 83B from breaking.

When the resin of the first resin portion 85-1 is capable of being molded at a lower pressure than the pressure applied to the resin for molding the second resin portion 85-2, the pressure applied to the resin for molding the first resin portion 85-1 can be further lowered. In this configuration, breaking of wires in the A-phase coil 83A and the B-phase coil 83B can be inhibited effectively.

When the resin of the second resin portion 85-2 has higher fluidity than the resin of the first resin portion 85-1, the space between the first pole teeth 81d and the second pole teeth 81e can be filled with the resin more adequately. In this configuration, entering water into the inner spaces of the A-phase yoke 81A and the B-phase yoke 81B can be inhibited effectively.

Additionally, the second resin portion 85-2 includes the annular part 88 having the circular annular shape disposed on the inner circumferential edge of the end surface of the A-phase yoke 81A. The sealing part 89 is connected to the resin-part connection portions 88a of the annular part 88 arranged circumferentially. The cavity 285 of the mold 200 for molding the resin member 85 includes the first cavity part 288 corresponding to the annular part 88 and the second cavity part 289 corresponding to the sealing part 89. The first cavity part 288 includes the cavity-part connection portions 288a arranged circumferentially corresponding to the resin-part connection portions 88a. The cavity-part connection portions 288a are connected to the second cavity part 289. In this configuration, the resin injected into the first cavity part 288 flows circumferentially in the first cavity part 288. Then, the resin flows from the first cavity part 288 through the cavity-part connection portions 288a into the second cavity part 289. Thus, the resin flows into the second cavity part 289 (i.e., the space between the pole teeth) evenly in the circumferential direction, and flows in the second cavity part 289 in the axial direction (Fig. 6). This causes the resin to spread in the second cavity part 289 smoothly, enabling a variation in the amount of the resin flowing into the second cavity part 289 to be reduced compared to a configuration in which the resin flows in the second cavity part 289 in the axial direction and in the circumferential direction (Fig. 7). Therefore, the space between the first pole teeth 81d and the second pole teeth 81e can be filled with the resin more adequately, resulting in effectively inhibiting water from entering the inner spaces of the A-phase yoke 81A and the B-phase yoke 81B.

Additionally, the A-phase yoke 81A includes the first plate portion 81a having the circular annular shape, the second plate portion 81b having the circular annular shape disposed parallel to the first plate portion 81a with a space in between, the first pole teeth 81d connected to the inner circumferential edge of the first plate portion 81a at right angles to the first plate portion 81a and pointing toward the second plate portion 81b, and the second pole teeth 81e connected to the inner circumferential edge of the second plate portion 81b at right angles to the second plate portion 81b and pointing toward the first plate portion 81a. The first pole teeth 81d and the second pole teeth 81e are arranged alternately and circumferentially in the A-phase yoke 81A. The B-phase yoke 81B has the same configuration as that of the A-phase yoke 81A. The annular part 88 is disposed on the inner circumferential edge of the first plate portion 81a of the A-phase yoke 81A. In this configuration, the A-phase yoke 81A and the B-phase yoke 81B each have a comparatively simple configuration, enabling manufacturing costs to be reduced by using presswork.

Additionally, the stator unit 80 includes the cover 95 made of resin. The cover 95 is integrally molded with the assembly 90 including the A-phase yoke 81A, the B-phase yoke 81B, the first resin portion 85-1, and the second resin portion 85-2. The cover 95 houses the assembly 90. In this configuration, the A-phase yoke 81A, the B-phase yoke 81B, the first resin portion 85-1, and the second resin portion 85-2 can be protected from impact and the like. The sealing part 89 is disposed in the space between the first pole teeth 81d and the second pole teeth 81e, restricting the resin for molding the cover 95 from flowing into the space. Therefore, burr, insufficient filling, and the like at the cover 95 can be inhibited compared to a configuration in which the resin for molding the cover 95 flows into the space.

The electric valve 1 has a configuration in which the rotational speed of the magnet rotor 41 is reduced and the rotation of the magnet rotor 41 is transmitted to the driving shaft 65. The electric valve 1 can be a direct drive electric valve in which the rotation of the magnet rotor 41 is transmitted directly to the driving shaft 65.

In this specification, terms indicating shapes, such as "circular cylindrical" and "circular columnar", are also used for members and parts of the members substantially having the shapes indicated by the terms. For example, the meaning of "a circular cylindrical member" includes a circular cylindrical member and a substantially circular cylindrical member.

The embodiment of the present invention is described above. The present invention, however, is not limited to the embodiment. Embodiments obtained by a person skilled in the art appropriately adding, removing, or modifying components according to the embodiment described above, and an embodiment obtained by appropriately combining features of the embodiment are included in the scope of the present invention as long as they have the gist of the present invention.

### Reference Signs List

1 ... electric valve, 10 ... valve body, 10a ... left surface, 10b ... right surface, 10c ... upper surface, 13 ... valve chamber, 14 ... valve port, 17 ... first passage, 18 ... second passage, 19 ... mounting hole 19, 19a ... bottom surface, 20 ... holder, 25 ... valve-member supporting member, 25a ... annular flat surface, 30 ... can, 35 ... joint member, 40 ... driving section, 41 ... magnet rotor, 42 ... connecting member, 43 ... rotor shaft, 50 ... planetary gear mechanism, 51 ... gear case, 52 ... fixed ring gear, 53 ... sun gear, 54 ... planetary gear, 55 ... carrier, 55a ... supporting shaft, 56 ... output gear, 57 ... output shaft, 57a ... slit, 60 ... guide member, 65 ... driving shaft, 66 ... circular columnar portion, 67 ... flat plate portion, 70 ... valve member, 71 ... stem, 72 ... valve portion, 73 ... spring receiving portion, 73a ... flange portion, 74 ... ball receiving portion, 75 ... valve opening spring, 80 ... stator unit, 80a ... inner circumferential surface, 80b ... fitting hole, 81A ... A-phase yoke, 82A ... A-phase bobbin, 83A ... A-phase coil, 81B ... B-phase yoke, 82B ... B-phase bobbin, 83B ... B-phase coil, 81a ... first plate portion, 81b ... second plate portion, 81c ... outer plate portion, 81d ... first pole teeth, 81e ... second pole teeth, 81f ... first opening, 81g ... second opening, 84 ... terminal, 85 ... resin member, 85-1 ... first resin portion, 85-2 ... second resin portion, 86A ... A-phase yoke filling part, 86B ... B-phase yoke filling part, 87 ... terminal supporting part, 88 ... annular part, 88a ... resin-part connection portion, 89 ... sealing part, 90 ... assembly, 95 ... cover, 96 ... peripheral wall portion, 97 ... upper wall portion, 98 ... connector portion, 99 ... circular cylindrical portion, 200 ... mold, 210 ... resin passage, 211 ... resin passage, 285 ... cavity, 287 ... third cavity part, 288 ... first cavity part, 288a ... cavity-part connection portion, 289 ... second cavity part

## Claims

1. A stator unit comprising:
a yoke having a hollow annular shape;
a bobbin around which a coil is wound, the bobbin having a circular cylindrical shape and disposed in an inner space of the yoke;
a first resin portion; and
a second resin portion,
wherein the yoke includes pole teeth arranged circumferentially in an inner circumference of the yoke,
wherein the first resin portion includes a filling part filling the inner space of the yoke,
wherein the second resin portion includes a sealing part filling a space between the pole teeth, and
wherein the bobbin separates the filling part from the sealing part.

2. The stator unit according to Claim 1, wherein a resin of the first resin portion is capable of being molded at a lower pressure than a pressure at which a resin of the second resin portion is molded.

3. The stator unit according to Claim 1 or Claim 2, wherein a resin of the second resin portion has higher fluidity than a resin of the first resin portion.

4. The stator unit according to any one of Claim 1 to Claim 3,
wherein the second resin portion further includes an annular part having a circular annular shape and disposed on an inner circumferential edge of an end surface of the yoke, and
wherein the annular part includes resin-part connection portions arranged circumferentially and connected to the sealing part.

5. The stator unit according to Claim 4,
wherein the yoke includes
a first plate portion having a circular annular shape,
a second plate portion having a circular annular shape and disposed parallel to the first plate portion with a space in between,
first pole teeth connected to an inner circumferential edge of the first plate portion at right angles to the first plate portion and pointing toward the second plate portion, and
second pole teeth connected to an inner circumferential edge of the second plate portion at right angles to the second plate portion and pointing toward the first plate portion,
wherein the first and second pole teeth are arranged alternately and circumferentially in the yoke, and
wherein the annular part is disposed on the inner circumferential edge of the first plate portion.

6. The stator unit according to any one of Claim 1 to Claim 5 further comprising:
a cover made of resin,
wherein the cover is molded integrally with an assembly including the yoke, the first resin portion, and the second resin portion and houses the assembly.

7. An electric valve comprising:
the stator unit according to any one of Claim 1 to Claim 6;
a can having a circular cylindrical shape and disposed inside the stator unit;
a magnet rotor disposed inside the can; and
a valve member driven by the magnet rotor.

8. A method for manufacturing a stator unit including a yoke having a hollow annular shape, a bobbin around which a coil is wound, the bobbin having a circular cylindrical shape and disposed in an inner space of the yoke, a first resin portion, and a second resin portion, the yoke including pole teeth arranged circumferentially in an inner circumference of the yoke, the first resin portion including a filling part filling the inner space of the yoke, the second resin portion including a sealing part filling a space between the pole teeth, the bobbin separating the sealing part from the filling part, the method comprising:
molding a resin into the second resin portion at a higher pressure than a pressure applied to a resin of the first resin portion when the first resin portion is molded.

## Amended claims

### Amended claims under Art. 19.1 PCT

1. (Amended) A stator unit comprising:
a yoke having a hollow annular shape;
a bobbin around which a coil is wound, the bobbin having a circular cylindrical shape and disposed in an inner space of the yoke;
a first resin portion; and
a second resin portion,
wherein the yoke includes pole teeth arranged circumferentially in an inner circumference of the yoke,
wherein the first resin portion includes a filling part filling the inner space of the yoke,
wherein the second resin portion includes a sealing part filling a space between the pole teeth, and
wherein the bobbin is a resin component different from the first and second resin portions and separates the filling part from the sealing part.

2. The stator unit according to Claim 1, wherein a resin of the first resin portion is capable of being molded at a lower pressure than a pressure at which a resin of the second resin portion is molded.

3. The stator unit according to Claim 1 or Claim 2, wherein a resin of the second resin portion has higher fluidity than a resin of the first resin portion.

4. The stator unit according to any one of Claim 1 to Claim 3,
wherein the second resin portion further includes an annular part having a circular annular shape and disposed on an inner circumferential edge of an end surface of the yoke, and
wherein the annular part includes resin-part connection portions arranged circumferentially and connected to the sealing part.

5. The stator unit according to Claim 4,
wherein the yoke includes
a first plate portion having a circular annular shape,
a second plate portion having a circular annular shape and disposed parallel to the first plate portion with a space in between,
first pole teeth connected to an inner circumferential edge of the first plate portion at right angles to the first plate portion and pointing toward the second plate portion, and
second pole teeth connected to an inner circumferential edge of the second plate portion at right angles to the second plate portion and pointing toward the first plate portion,
wherein the first and second pole teeth are arranged alternately and circumferentially in the yoke, and
wherein the annular part is disposed on the inner circumferential edge of the first plate portion.

6. The stator unit according to any one of Claim 1 to Claim 5 further comprising:
a cover made of resin,
wherein the cover is molded integrally with an assembly including the yoke, the first resin portion, and the second resin portion and houses the assembly.

7. An electric valve comprising:
the stator unit according to any one of Claim 1 to Claim 6;
a can having a circular cylindrical shape and disposed inside the stator unit;
a magnet rotor disposed inside the can; and
a valve member driven by the magnet rotor.

8. (Amended) A method for manufacturing a stator unit including a yoke having a hollow annular shape, a bobbin around which a coil is wound, the bobbin having a circular cylindrical shape and disposed in an inner space of the yoke, a first resin portion, and a second resin portion, the yoke including pole teeth arranged circumferentially in an inner circumference of the yoke, the first resin portion including a filling part filling the inner space of the yoke, the second resin portion including a sealing part filling a space between the pole teeth, the method comprising:
disposing the bobbin in the inner space of the yoke to separate the inner space of the yoke from the space between the pole teeth by the bobbin,
placing the yoke in a cavity of a mold,
injecting a resin, the resin being a first resin, into a cavity part of the cavity corresponding to the first resin portion,
applying a pressure to the first resin,
injecting a resin, the resin being a second resin, into a cavity part of the cavity corresponding to the second resin portion, and
applying, to the second resin, a pressure higher than a pressure applied to the first resin.

Statement under Article 19(1)

The amendments clarifies that the invention of Claim 1 includes a feature that "the bobbin is a resin component different from the first and second resin portions and separates the filling part from the sealing part". Paragraph [0043] of the specification describes that the bobbin is made of resin and paragraph [0050] describes that the bobbin is placed in the inner space of the yoke before the first resin portion and the second resin portion are molded. These show that the bobbin is a resin component different from the first and second resin portions.

The amendments clarifies that the invention of Claim 8 includes a feature that "disposing the bobbin in the inner space of the yoke to separate the inner space of the yoke from the space between the pole teeth by the bobbin, placing the yoke in a cavity of a mold, injecting a resin, the resin being a first resin, into a cavity part of the cavity corresponding to the first resin portion, applying a pressure to the first resin, injecting a resin, the resin being a second resin, into a cavity part of the cavity corresponding to the second resin portion, and applying, to the second resin, a pressure higher than a pressure applied to the first resin". The basis for the amendments is described in paragraphs [0042], [0050] - [0058], and [0064] of the specification.

In the cited document (JP2015-056587A) of the international search report, a filling part filling the inner space of the yoke and a sealing part filling a space between pole teeth are integrally molded, and a single resin portion (Pl) includes both the filling part and the sealing part. In the cited document (JP7-222424A) of the international search report, a bobbin and sealing part filling a space between pole teeth are integrally molded.

In the present invention, since the bobbin separates the filling part (the inner space of the yoke) from the sealing part (the space between the pole teeth), the molding condition for the filling part can be set independently from the molding condition for the sealing part.
